(19) **Europäisches Patentamt / European Patent Office / Office européen des brevets**

(11) **EP 1 964 252 B1**

(12) **FASCICULE DE BREVET EUROPEEN**

(45) Date de publication et mention
de la délivrance du brevet:
**17.02.2010 Bulletin 2010/07**

(21) Numéro de dépôt: **06842157.7**

(22) Date de dépôt: **13.12.2006**

(51) Int Cl.:
*H02M 1/12* $^{(2006.01)}$    *H02M 7/48* $^{(2007.01)}$

(86) Numéro de dépôt international:
**PCT/FR2006/051347**

(87) Numéro de publication internationale:
**WO 2007/074268 (05.07.2007 Gazette 2007/27)**

(54) **MACHINE ELECTRIQUE TOURNANTE A PHASES DECOUPLEES**

ROTIERENDE ELEKTRISCHE MASCHINE MIT ENTKOPPELTEN PHASEN

ROTATING ELECTRICAL MACHINE WITH DECOUPLED PHASES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2005 FR 0513296**

(43) Date de publication de la demande:
**03.09.2008 Bulletin 2008/36**

(73) Titulaire: **VALEO EQUIPEMENTS ELECTRIQUES MOTEUR**
**94046 Créteil (FR)**

(72) Inventeur: **SARDAT, Pierre**
**93340 Le Raincy (FR)**

(56) Documents cités:
**US-A- 5 552 976**

Printed by Jouve, 75001 PARIS (FR)

# Description

La présente invention est relative aux machines électriques tournantes, notamment aux alterno-démarreurs utilisés par exemple dans des véhicules automobiles.

Le document US 555276 divulgue une machine éléctrique tournante ayant les caractéristiques du préambule de la revendication 1.

Plus particulièrement, l'invention concerne une machine électrique tournante comprenant un ensemble électromécanique adapté pour convertir une puissance électrique sous la forme d'un courant alternatif, en une puissance mécanique. Cet ensemble comprend un nombre n de phases, où n est au moins égal à 2, un circuit onduleur adapté pour délivrer ledit courant alternatif et comprenant n paires de circuits de commutation montés en série l'un avec l'autre, chaque paire étant couplée à une phase respective de l'ensemble électromécanique.

Il est connu d'employer de telles machines tournantes, notamment dans le cadre de machines réversibles de type alterno-démarreurs. Dans une machine électrique tournante de ce type, l'ensemble électromécanique comprend par exemple un moteur synchrone à n phases, un circuit de commutation formant circuit onduleur, et un circuit de commande pour commander le circuit de commutation. Le moteur synchrone comprend un stator avec une pluralité de phases formées par des enroulements, et un rotor monté mobile par rapport au stator et comprenant par exemple un aimant permanent.

Lors de l'utilisation d'une machine de ce type en mode démarreur, le circuit de commutation convertit une puissance électrique continue, délivrée par une batterie d'un véhicule, en une puissance électrique alternative. A partir de cette puissance électrique alternative, le stator génère un champ magnétique tournant, pour générer un couple mécanique fourni au moteur lors du démarrage. Il est souhaitable de produire un couple important dans ce mode de fonctionnement.

Cependant, la commande des circuits de commutation peut être perturbée par des signaux électromagnétiques, pouvant provoquer un dysfonctionnement de la commande du moteur. Ces perturbations électromagnétiques peuvent être générées par d'autres appareils fonctionnant au voisinage de la machine électrique tournante.

En outre, la machine électrique tournante peut elle aussi produire des perturbations électromagnétiques, qui peuvent s'avérer gênantes pour les autres appareils de l'environnement.

Il est donc souhaitable que les appareils de ce type respectent les relations à la norme CEM (Compatibilité ElectroMagnétique).

La présente invention a notamment pour but de pallier les inconvénients précités en fournissant une machine électrique tournante moins sensible aux perturbations électromagnétiques.

A cet effet, selon des modes de réalisation de l'invention, une machine électrique tournante du type en question comporte un premier élément capacitif qui est connecté en parallèle avec chaque paire respective de circuits de commutation et un circuit d'amortissement, comprenant un élément résistif et un second élément capacitif, qui est connecté en parallèle avec le premier élément capacitif de chaque paire respective de circuits de commutation.

Grâce à ces dispositions, on assure un découplage des circuits de commutation de chaque phase. La machine électrique tournante est ainsi mieux protégée des agressions électromagnétiques et peut donc être utilisée dans un environnement plus exigent. De plus, les composantes hautes fréquences du courant sont lissées par l'intermédiaire de ces capacités, résultant ainsi en une diminution de l'amplitude des harmoniques qui peuvent perturber les appareils à proximité (CEM conduite et rayonnée).

La capacité de ce premier élément capacitif forme un circuit oscillant accordé avec l'inductance des éléments conducteurs, notamment l'inductance des câbles reliant la batterie au circuit onduleur. Pour amortir des oscillations à l'intérieur de ce circuit oscillant provoquées notamment par des chutes de tension à la commutation, le circuit d'amortissement est couplé en parallèle avec chaque premier élément capacitif. La résistance de l'élément résistif du circuit d'amortissement est choisie pour amortir de manière optimale ces oscillations.

Une première fonction du second élément capacitif est d'empêcher qu'un courant d'alimentation qui est continu ne soit dissipé en permanence par la résistance du circuit d'amortissement. En effet, la capacité joue un rôle d'interrupteur ouvert pour un courant continu, empêchant la conduction au travers de l'élément résistif.

Conformément à un mode de réalisation de l'invention, la capacité du second élément capacitif est sensiblement supérieure à la capacité du premier élément capacitif.

En effet, comme la capacité du second élément capacitif est supérieure à la capacité du premier élément capacitif, celle-ci conduit le courant pour des fréquences plus basses que la fréquence de résonance du circuit oscillant parasite. En conséquence, le premier élément capacitif est shunté pour amortir les oscillations au moyen de la résistance de l'élément résistif.

Plus précisément, la valeur de la capacité du second élément capacitif est par exemple sensiblement égale ou supérieure au triple de la capacité du premier élément capacitif de découplage. Il a en effet été établi que cela constitue un bon compromis entre la taille des composants et l'efficacité de shunt à haute fréquence du premier élément capacitif.

Selon une variante de l'invention, le circuit onduleur est couplé à une source de courant continu par l'intermédiaire d'éléments conducteurs, lesdits éléments conducteurs présentant une inductance interne parasite.

Le circuit d'amortissement et le premier élément capacitif forment avec les conducteurs un circuit oscillant. L'élément résistif du circuit d'amortissement est adapté pour atténuer les oscillations au sein dudit circuit oscillant

On choisit donc la résistance de l'élément résistif en fonction des valeurs des inductances parasites et des capacités, de telle sorte que le circuit oscillant soit amorti de manière optimale.

Avantageusement, on peut choisir la résistance de l'élément résistif sensiblement égale à $\sqrt[4]{\dfrac{L^2}{C_1 C_2}}$

où L est la somme des inductances parasites des conducteurs électriques,
où C1 est la capacité du premier élément capacitif,
où C2 est la capacité du second élément capacitif.

En effet, on se place ainsi au niveau de la moyenne géométrique des fréquences de résonance propres de chaque élément capacitif couplé aux inductances parasites. L'amortissement est optimal pour des valeurs proches de cette moyenne.

Avantageusement, la machine électrique tournante peut comprendre en outre un circuit de commande avec n paires de sorties pour commander les n paires de circuits de commutation respectives, et le circuit de commande peut comprendre au moins un élément résistif de sortie connecté auxdites sorties.

Cela permet de limiter la vitesse de variation de la tension aux bornes des éléments capacitifs. En effet, au cours de la commutation, de fortes variations de tension sont subies par les capacités, ce qui provoque le passage de forts courants. Afin de limiter ces courants, on ralentit la commutation de l'état passant à l'état bloqué et inversement. Cela a pour avantage de permettre l'emploi de composants de faible taille, notamment l'utilisation de condensateurs céramiques. On diminue en conséquence la taille totale du circuit de commande, qui peut être véritablement incorporé au moteur. Cependant, on relève des pertes par commutation supérieures en raison du temps de commutation plus long.

Suivant une variante de réalisation, chaque élément résistif de sortie forme avec des capacités parasites du circuit de commutation correspondant un circuit RC ayant une constante de temps donnée. La valeur de l'élément résistif est alors telle que ladite constante de temps est sensiblement 5% d'une période minimale du courant alternatif.

Ce compromis permet en fait de réduire fortement la taille des éléments capacitifs sans toutefois subir des pertes par commutation trop importantes pour les circuits de commutation.

De même, chaque élément résistif de sortie forme avec des capacités parasites du circuit de commutation correspondant un circuit RC ayant une constante de temps donnée. La valeur de l'élément résistif est alors telle qu'une variation maximale de tension aux bornes du premier élément capacitif est sensiblement inférieure à 5V/$\mu$s. Cela permet notamment l'emploi de condensateurs céramiques, dont la dimension est faible, et qui suffisent pour assurer le découplage électromagnétique de manière efficace.

D'autres caractéristiques et avantages de l'invention apparaîtront au cours de la description suivante d'un de ses modes de réalisation, donnée à titre d'exemple non limitatif, en regard des dessins joints.

Sur les dessins:

- la figure 1 est un schéma simplifié d'une machine électrique tournante conforme à l'invention;
- la figure 2 est un schéma électrique d'une phase de la machine électrique tournante de la figure 1 ; et
- la figure 3 est un chronogramme représentant l'évolution de signaux lors d'une commutation dans la phase de la figure 2.

Sur les différentes figures, les mêmes références désignent des éléments identiques ou similaires.

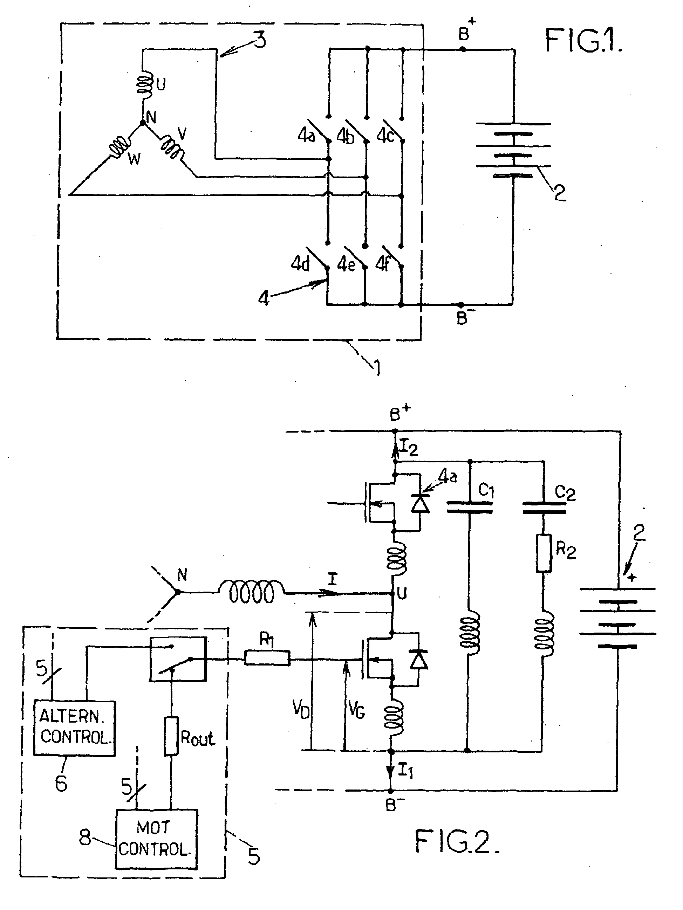

Comme représenté sur la figure 1, une machine électrique tournante 1 est alimentée par une source de tension continue, par exemple une batterie 2. La machine électrique tournante 1 comprend un ensemble électromécanique 3, adapté pour convertir une puissance électrique en une puissance mécanique. Dans l'exemple illustré, il s'agit d'un moteur synchrone triphasé 3 (n = 3). Éventuellement, ce moteur peut être utilisé en alternateur, notamment si la machine électrique tournante 1 est un alterno-démarreur.

De plus, la machine électrique tournante 1 comprend un circuit onduleur triphasé 4, couplé d'une part à la batterie 2 par l'intermédiaire des bornes B+ et B-, et d'autre part au moteur triphasé 3 par l'intermédiaire des phases U, V, W. Dans l'exemple illustré, les enroulements statoriques sont montés en étoile, c'est-à-dire qu'ils ont une borne commune, le neutre N. Cependant, la structure en triangle peut également être utilisée. De même, le nombre de phases peut être différent. On préfère cependant un nombre de phases impair.

L'onduleur 4 comporte six circuits de commutation 4a à 4f. Chaque paire de circuits de commutation est couplée à une phase respective au niveau d'une borne commune. Ainsi, la paire 4a-4d a une borne commune U connectée à l'enroulement U du stator. De même, la paire 4b-4e a une borne commune V connectée à l'enroulement V du stator, et la paire 4c-4f a une borne commune W connectée à l'enroulement W du stator.

Pour simplifier l'étude de l'invention, on se limitera à l'étude d'une commutation d'une phase, par exemple la phase U avec sa paire de circuits de commutation correspondante 4a-4d. La figure 2 représente de manière simplifiée la paire de circuits de commutation 4a-4d, avec une partie du circuit de commande 5 du circuit de commutation 4d. Chaque circuit de commutation comprend un circuit de commande semblable qui n'a pas été représenté pour plus de clarté.

Dans l'exemple représenté, les circuits de commutation 4a et 4d sont des transistors MOSFETs (pour Metal Oxide Semiconductor Field Effect Transistors). Le circuit de commande est adapté pour une commande de l'ensemble électromécanique en mode alternateur avec le bloc de commande d'alternateur 6 (ALTERN. CONTROL.) et une commande en mode moteur avec le bloc de commande en mode moteur 8 (MOT. CONTROL.). Le signal de commande est par exemple multiplexé par un multiplexeur 7 à deux entrées. Un élément résistif de sortie $R_{out}$ peut être connectée entre le bloc de commande en moteur 8 et le multiplexeur 7. Le circuit de commande 5 est couplé est avec la grille du transistor 4d par l'intermédiaire d'un résistor R1.

Conformément à d'autres modes de réalisation de l'invention, en parallèle à la paire de MOSFETs 4a et 4d est connectée un premier élément capacitif $C_1$. Cet élément capacitif permet de découpler les phases et les branches d'alimentation connectées aux bornes B+ et B-. Ainsi, la machine électrique tournante 1 est moins sensible aux perturbations électromagnétiques qui pourraient causer un dysfonctionnement des MOSFETs 4a et 4d. En effet, sans cette capacité de découplage qui « absorbe » les hautes fréquences, une perturbation électromagnétique peut modifier un potentiel de référence, par exemple le potentiel au point B+, causant alors la commutation de 4a. Dans notre exemple, on a choisi la capacité $C_1$ sensiblement égale à 220nF.

Cependant, le premier élément capacitif $C_1$ forme avec l'inductance parasite totale L des éléments conducteurs, modélisée par les bobines représentées sur la figure 2, un circuit oscillant, avec une fréquence de résonance environ égale à $\dfrac{1}{2\Pi\sqrt{L.C_1}}$. Pour amortir ce circuit oscillant, on place en parallèle à cette capacité un élément résistif $R_2$.

Ensuite, afin d'éviter que cet élément résistif $R_2$ ne shunte de manière permanente la paire de MOSFETs, un élément capacitif $C_2$ est placé en série avec cette résistance. En effet, tandis qu'un courant continu provoque la charge de cet élément capacitif, bloquant cette branche du circuit, un courant alternatif peut passer au travers de cet élément capacitif $C_2$ et être dissipé ou amorti dans la résistance de l'élément résistif $R_2$.

On peut ainsi amortir les oscillations produites par le circuit oscillant $LC_1$ en choisissant la capacité du second élément capacitif de sorte que celle-ci soit supérieure à celle du premier élément capacitif $C_1$. De préférence, on choisit la capacité $C_2$ sensiblement égale au triple de la capacité $C_1$, soit dans notre exemple 680 nF. En effet, dans ce cas, le second élément capacitif $C_2$ se comporte sensiblement comme un interrupteur fermé pour un courant alternatif proche de la fréquence de résonance du circuit oscillant $LC_1$.

Alors, l'élément résistif R2 amortit les oscillations produites dans ce circuit oscillant. Pour optimiser cet effet d'amortissement, on choisit la résistance $R_2$ sensiblement égale à $\sqrt[4]{\dfrac{L^2}{C_1 C_2}}$. Ainsi, lors de chaque commutation, les dépassements provoqués par les oscillations sont d'une amplitude qui devient si faible que ces oscillations ne peuvent provoquer une commutation parasite de l'un des MOSFETs 4a et 4d. De plus, le régime permanent est atteint rapidement.

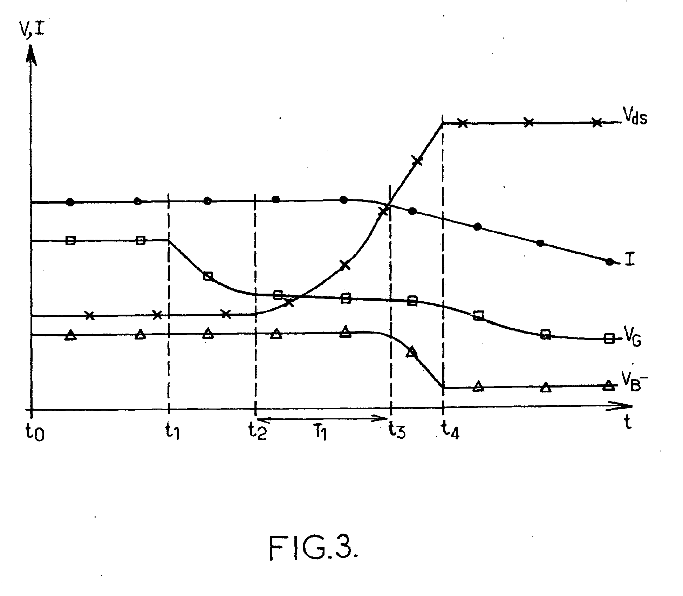

La figure 3 est un chronogramme montrant l'évolution de différentes tensions et courants du circuit de la figure 2 lors du passage de l'état passant à l'état bloqué du MOSFET 4d. A l'état initial $t_0$, le transistor 4a est à l'état bloqué et le transistor 4d est à l'état passant. A l'instant $t_1$, le circuit de commande impose.un signal bas à la sortie connectée à la grille du MOSFET 4d. La tension de la grille $V_G$ commence alors à décroître avec une constante de temps qui est fonction des capacités parasites du MOSFET 4d et des résistances $R_1$ et $R_{out}$.

Lorsque cette tension $V_G$ atteint un premier seuil, à l'instant $t_2$, cette tension diminue plus lentement. On appelle ce phénomène le « Plateau Miller », dont la durée $T_1$ dépend des résistances $R_1$ et $R_{out}$ et des capacités parasites du MOSFET. Durant le « parcours » de ce plateau, la résistance interne du MOSFET 4d commence à augmenter, et le MOSFET 4d fonctionne en mode de conduction linéaire. Comme le courant I en provenance de l'enroulement statorique de la phase U ne peut varier rapidement, en raison de l'inductance de cet enroulement, la tension de drain $V_D$ du MOSFET 4d augmente avec l'augmentation de la résistance interne du transistor.

Lorsque la tension $V_D$ atteint le potentiel d'alimentation B+ à l'instant $t_3$, la diode de body du MOSFET 4a devient passante et le courant en provenance du stator commence à traverser cette diode. En conséquence, le courant I1 dans le MOSFET 4d diminue, et l'inductance parasite des éléments conducteurs cause une variation négative du potentiel de référence B-. Cette variation est dangereuse car c'est sur cette référence que le circuit de commande est connecté.

A l'instant $t_4$, les surtensions sont établies, et le MOSFET 4d est en mode claquage et reste dans ce mode de conduction le temps que l'énergie stockée dans les inductances parasites du circuit entre l'onduleur 4 et la batterie 2 (figure 1) soit dissipée dans les transistors.

Au cours de cette commutation, la tension aux bornes des éléments capacitifs $C_1$ et $C_2$ varie rapidement. Cela a pour conséquence directe la formation d'un courant important dans ces composants. Afin de limiter ce courant, on place l'élément résistif $R_{out}$, de sorte que cette résistance supplémentaire entraîne l'augmentation de la constante de temps du déchargement des capacités parasites du MOSFET 4d. Cela a notamment pour conséquence l'allongement de la durée $T_1$ du plateau Miller. Par conséquent, la valeur maximale de $\left(\dfrac{dV}{dt}\right)$

où V est la tension aux bornes de l'élément capacitif, peut être limitée. Dans cet exemple de réalisation, cette valeur maximale est d'environ 5V/µs. Cette valeur permet d'utiliser des condensateurs céramiques, dont la taille est plus faible, ce qui permet une meilleure intégration de l'ensemble du circuit de commande.

De plus, la limitation de la variation de la tension permet d'éviter des surintensités importantes, allongeant de ce fait la durée de vie du circuit complet.

Cependant, en allongeant ainsi le plateau Miller, on ralentit la commutation, ce qui entraîne des pertes par commutation plus importantes. Néanmoins, dans ce mode de fonctionnement en moteur, le but principal est de fournir un couple important pour démarrer un moteur thermique. Comme l'élément résistif est placé entre le multiplexeur 7 et le circuit de commande en mode moteur 8, cet allongement du temps de commutation d'intervient pas en mode alternateur, au cours duquel on cherche à avoir un rendement énergétique optimal.

Avec cette structure, on peut garder les performances optimales de conversion de la puissance mécanique en puissance électrique en mode alternateur et on peut de plus assurer un bon découplage dans les deux modes démarreur et alternateur.

## Revendications

**1.** Machine électrique tournante (1) comprenant:

- un ensemble électromécanique (3) adapté pour convertir une- puissance électrique sous la forme d'un courant alternatif, en une puissance mécanique, et comprenant n phases, où n est au moins égal à 2,
- un circuit onduleur (4) adapté pour délivrer ledit courant alternatif comprenant un nombre n de paires de circuits de commutation (4a-4f) montés en série l'un avec l'autre, chaque paire étant couplée à une phase respective (U,V,W) de l'ensemble électromécanique, et

un premier élément capacitif de découplage (C1) est connecté en parallèle avec chaque paire respective de circuits de commutation (4a-4f); **caractérisée en ce qu'**un circuit d'amortissement, comportant un élément résistif (R2) et un second élément capacitif (C2), est connecté en parallèle avec le premier élément capacitif de découplage de chaque paire respective de circuits de commutation.

**2.** Machine électrique tournante selon la revendication 1, dans laquelle la capacité (C2) du second élément capacitif est sensiblement supérieure à la capacité du premier élément capacitif.

**3.** Machine électrique tournante selon la revendication 2, dans laquelle la valeur de la capacité (C2) du second élément capacitif est sensiblement égale ou supérieure au triple de la capacité (C1) du premier élément capacitif de découplage.

**4.** Machine tournante selon l'une quelconque des revendications précédentes, dans laquelle le circuit onduleur (4) est couplé à une source de tension continue (2) par l'intermédiaire d'éléments conducteurs, lesdits éléments conducteurs présentant une inductance interne parasite, dans laquelle le circuit d'amortissement et le premier élément capacitif forment avec les conducteurs un circuit oscillant, la valeur de l'élément résistif (R2) du circuit d'amortissement étant adaptée pour atténuer les oscillations au sein dudit circuit oscillant.

**5.** Machine électrique tournante selon la revendication 4, dans laquelle la résistance de l'élément résistif est sensiblement égale à $\sqrt[4]{\dfrac{L^2}{C_1 C_2}}$

où L est la somme des inductances parasites des conducteurs électriques,
où C1 est la capacité du premier élément capacitif,
où C2 est la capacité du second élément capacitif.

**6.** Machine électrique tournante selon l'une quelconque des revendications précédentes, comprenant en outre un circuit de commande (8) avec n paires de sorties pour commander les n paires de circuits de commutation, respectivement, et dans laquelle le circuit de commande comprend au moins un élément résistif de sortie ($R_{out}$) connecté auxdites sorties.

**7.** Machine électrique tournante selon la revendication 6, dans laquelle chaque élément résistif de sortie forme avec des capacités parasites du circuit de commutation (4d) correspondant un circuit RC ayant une constante de temps donnée, et dans laquelle la valeur de l'élément résistif est telle que ladite constante de temps est sensiblement supérieure à environ 5% d'une période maximale du courant alternatif.

**8.** Machine électrique tournante selon la revendication 6 ou la revendication 7, dans laquelle chaque élément résistif de sortie forme avec des capacités parasites du circuit de commutation (4d) correspondant un circuit RC ayant une constante de temps donnée, et dans laquelle la valeur de l'élément résistif est telle qu'une variation maximale de tension aux bornes du premier élément capacitif est sensiblement inférieure à environ 5V/µs.

## Claims

1. Rotating electrical machine (1) comprising:

   - an electromechanical assembly (3) adapted to convert electrical power, in the form of an alternating current, into mechanical power, and comprising n phases, where n is equal to at least 2,
   - an inverter circuit (4) adapted to deliver said alternating current comprising a number n of pairs of switching circuits (4a-4f) connected in series with each other, each pair being coupled to a respective phase (U, V, W) of the electromechanical assembly, and a first capacitive decoupling element (C1) is connected in parallel with each respective pair of switching circuits (4a-4f);

   **characterised in that** a damping circuit, comprising a resistive element (R2) and a second capacitive element (C2), is connected in parallel with the first capacitive decoupling element of each respective pair of switching circuits.

2. Rotating electrical machine according to Claim 1, in which the capacitance (C2) of the second capacitive element is substantially greater then the capacitance of the first capacitive element.

3. Rotating electrical machine according to Claim 2, in which the value of the capacitance (C2) of the second capacitive element is substantially equal to or greater than three times the capacitance (C1) of the first capacitive decoupling element.

4. Rotating machine according to any one of the preceding claims, in which the inverter circuit (4) is coupled to a DC voltage source (2) by means of conductive elements, said conductive elements having a stray internal inductance, in which the damping circuit and the first capacitive element form, with the conductors, an oscillatory circuit, the value of the resistive element (R2) of the damping circuit being adapted to attenuate the oscillations within said oscillatory circuit.

5. Rotating electrical machine according to Claim 4, in which the resistance of the resistive element is substantially equal to $\sqrt[4]{\dfrac{L^2}{C_1 C_2}}$

   where L is the sum of the stray inductances of the electrical conductors,
   C1 is the capacitance of the first capacitive element,
   and C2 is the capacitance of the second capacitive element.

6. Rotating electrical machine according to any one of the preceding claims, also comprising a control circuit (8) with n pairs of outputs for controlling the n pairs of switching circuits, respectively, and in which the control circuit comprises at least one resistive output element ($R_{out}$) connected to said outputs.

7. Rotating electrical machine according to Claim 6, in which each resistive output element forms, with stray capacitances of the corresponding switching circuit (4d), an RC circuit having a given time constant, and in which the value of the resistive element is such that said time constant is substantially greater than approximately 5% of a maximum period of the alternating current.

8. Rotating electrical machine according to Claim 6 or Claim 7, in which each resistive output element forms, with stray capacitances of the corresponding switching circuit (4d), an RC circuit having a given time constant, and in which the value of the resistive element is such that a maximum voltage variation at the terminals of the first capacitive element is substantially less than approximately 5V/$\mu$s.

## Patentansprüche

1. Rotierende elektrische Maschine (1), umfassend:

   - eine elektromechanische Einheit (3), die geeignet ist, eine elektrische Leistung in Form eines Wechselstroms in eine mechanische Leistung umzuwandeln, und die n Phasen umfasst, wobei n mindestens gleich 2 ist,
   - eine Wechselrichterschaltung (4), die geeignet ist, den besagten Wechselstrom zu liefern, und eine Anzahl von Schaltkreispaaren (4a-4f) umfasst, die in Reihe zueinander geschaltet sind, wobei jedes Paar an eine entsprechende Phase (U, V, W) der elektromechanischen Einheit angeschlossen ist und ein erstes kapazitives Entkopplungselement (C1) mit jedem entsprechenden Schaltkreispaar (4a-4F) parallel geschaltet ist,

   **dadurch gekennzeichnet, dass** eine Dämpfungsschaltung, die ein resistives Element (R2) und ein zweites kapazitives Element (C2) umfasst, mit dem ersten kapazitiven Entkopplungselement jedes entsprechenden Schaltkreispaares parallel geschaltet ist.

2. Rotierende elektrische Maschine nach Anspruch 1, bei der die Kapazität (C2) des zweiten kapazitiven Elements deutlich größer als die Kapazität des ersten kapazitiven Elements ist,

**3.** Rotierende elektrische Maschine nach anspruch 2, bei der der Wert der Kapazität (C2) des zweiten kapazitiven Elements in etwa gleich dem Dreifachen oder größer als das Dreifache der (C1) des ersten kapazitiven Entkopplungselements ist.

**4.** Rotierende elektrische Maschine nach einem der vorangehenden Ansprüche, bei der die Wechserichterschaitung (4) über Leiterelemente an eine Gleichspannungsquelle (2) angeschlossen ist, wobei die besagten Leiterelemente eine innere Störinduktivität aufweisen, bei der die Dämpfungsschaltung und das erste kapazitive Element zusammen mit den Leitern einen Schwingkreis bilden, wobei der Wert des resistiven Elements (R2) der Dämpfungsschaitung entsprechend angepasst ist, um die Schwingungen im Innern des besagten Schwingkreises zu dämpfen.

**5.** Rotierende elektrische Maschine nach Anspruch 4, bei der der Widerstand des resistiven Elements in etwa gleich $\sqrt[4]{\dfrac{L^2}{C_1 C_2}}$ ist, wobei gilt:

L ist die Summe der Störinduktivitäten der elektrischen Leiter,
$C_1$ ist die Kapazität des ersten kapazitiven Elements,
$C_2$ ist die Kapazität des zweiten kapazitiven Elements.

**6.** Rotierende elektrische Maschine nach einem der vorangehenden Ansprüche, die außerdem eine Steuerschaltung (8) mit n Ausgangspaaren zur Steuerung der entsprechenden n Schaltkreispaare umfasst und bei der die Steuerschaltung mindestens ein an die besagten Ausgänge angeschlossenes resistives Ausgangselement ($R_{out}$) enthält.

**7.** Rotierende elektrische Maschine nach anspruch 6, bei der jedes resistive Ausgangselement zusammen mit Störkapazitäten des entsprechenden Schaltkreises (4d) eine RC-Schaltung bildet, die eine gegebene Zeitkonstante aufweist, und bei der der Wert des resistiven Elements so bemessen ist, dass die besagte Zeitkonstante deutlich größer als etwa 5% einer maximalen Periode des Wechselstroms ausfällt.

**8.** Rotierende elektrische Maschine nach Anspruch 6 oder Anspruch 7, bei der jedes resistive Ausgangselement zusammen mit Störkapazitäten des entsprechenden Schaltkreises (4d) eine RC-Schaltung bildet, die eine gegebene Zeitkonstante aufweist, und bei der der Wert des resistiven Elements so bemessen ist, dass eine maximale Änderung der Klemmenspannung des ersten kapazitiven Elements deutlich kleiner etwa 5V/μs ausfällt,

FIG.1.

FIG.2.

FIG.3.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 555276 A